(19) Europäisches Patentamt
European Patent Office
Office européen des brevets

(11) EP 2 657 670 A1

(12) **EUROPÄISCHE PATENTANMELDUNG**

(43) Veröffentlichungstag:
30.10.2013 Patentblatt 2013/44

(51) Int Cl.:
*G01M 1/10* (2006.01)     *F01D 21/00* (2006.01)
*G01M 1/12* (2006.01)

(21) Anmeldenummer: 12165244.0

(22) Anmeldetag: 24.04.2012

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME

(71) Anmelder: **Siemens Aktiengesellschaft**
80333 München (DE)

(72) Erfinder:
• **Baum, Christian**
  **12309 Berlin (DE)**
• **Jahnke, Ronny**
  **14612 Falkensee (DE)**

(54) **Prüfnormal zur Überprüfung einer Momentenwaage**

(57) Die Erfindung betrifft ein Prüfnormal zur Überprüfung einer Momentenwaage. Ferner betrifft die vorliegende Erfindung eine Messvorrichtung mit einer Momentenwaage, welche eine Messaufnahme aufweist, und wenigstens einem Prüfkörper, welcher an der Messaufnahme lösbar gehalten werden kann.

## FIG 1

EP 2 657 670 A1

**Beschreibung**

Die Erfindung betrifft ein Prüfnormal zur Überprüfung einer Momentenwaage. Ferner betrifft die vorliegende Erfindung eine Messvorrichtung mit einer Momentenwaage, welche eine Messaufnahme aufweist, und wenigstens einem Prüfkörper, welcher an der Messaufnahme lösbar gehalten werden kann.

Vor der Beschaufelung eines Rotors mit Turbinen- oder Verdichterschaufeln wird das Momentengewicht der zu montierenden Schaufeln bestimmt. Anschließend werden die Schaufeln nach einer besonderen Vorschrift gemäß ihrer Momentengewichte verteilt, um die Restunwucht und damit den Aufwand zum Auswuchten zu minimieren. Zur Bestimmung des Momentengewichts der Schaufeln werden Momentenwaagen eingesetzt, die eine Messaufnahme aufweisen, in welche die zu wiegende Schaufel eingehängt wird.

Solch eine Momentenwaage ist beispielsweise in der Druckschrift EP 2 363 698 A2 beschrieben. Die aus dieser Druckschrift bekannte Momentenwaage weist eine scheibenförmige, runde Grundplatte auf, welche sich an ihrer Unterseite über Wägezellen auf einer Aufnahmeplatte abstützt. An der Oberseite der Grundplatte ist eine Messaufnahme angeordnet, in welche die zu wiegende Schaufel eingesetzt werden kann. Um den Schwerpunkt der eingesetzten Schaufel zumindest im Wesentlichen über dem Mittelpunkt der Grundplatte anzuordnen, sind auf der Grundplatte verschiedene Bohrungen ausgebildet, um die Messaufnahme zwischen dem Mittelpunkt der Grundplatte und deren radial äußeren Ende zu befestigen. Die korrekte Positionierung der Messaufnahme für den zu wiegenden Schaufeltyp wird anschließend mit einem Objekttastverfahren mittels einer Coordinate Measuring Machine (CMM) überprüft. Dabei wird der Abstand zwischen der Messaufnahme und dem Mittelpunkt der Grundplatte vermessen und in einer an die Momentenwaage angeschlossenen Auswerteeinheit für die weitere Berechnung des Momentengewichts der zu wiegenden Schaufel herangezogen.

Neben dem erstmaligen Einrüsten der Momentenwaage für einen neuen Schaufeltyp werden die Funktionalität und die Messgenauigkeit der Momentenwaage für gewöhnlich täglich überprüft. Hierzu wird die Momentenwaage zunächst ohne die eingehängte Schaufel tariert. Danach wird eine sogenannte Meisterschaufel eingehängt, die in Geometrie und Masse dem zu wiegenden Schaufeltyp entspricht. Das von der Momentenwaage gemessene Momentengewicht und Gewicht der eingehängten Meisterschaufel werden mit dem aus einer Urmessung bekannten Momentengewicht und Gewicht der Meisterschaufel verglichen. Wenn das gemessene Ergebnis außerhalb eines vorgegebenen Toleranzfeldes liegt, wird die Momentenwaage erneut eingestellt und vermessen, ansonsten ist die Momentenwaage einsatzbereit. Ebenso wäre eine Relativmessung denkbar, bei der die Waage mit eingelegter Meisterschaufel tariert wird. In diesem Fall ist die oben genannte Funktionsüberprüfung nicht möglich.

Zum Teil wird als nachteilig empfunden, dass zur Bestimmung des korrekt eingestellten Abstandes zwischen dem Mittelpunkt der Grundplatte und der Messaufnahme die Momentenwaage aufwändig mit einem Objekttastverfahren vermessen werden muss. Weiterhin nachteilig ist, dass es sich bei den Meisterschaufeln um wertvolle Serienbauteile aus hochwarmfesten Materialien handelt, die nicht in der Turbine zum Einsatz kommen können. Zudem handelt es sich bei den Meisterschaufeln um kein Mess- und Prüfmittel, welches eine Rückführbarkeit der mit der Momentenwaage gemessenen Ergebnisse auf ein Normal erlaubt.

Ausgehend von diesem Stand der Technik ist es eine Aufgabe der vorliegenden Erfindung, ein Prüfnormal der eingangs genannten Art zu schaffen, das eine einfache Überprüfbarkeit der Momentenwaage und eine Rückführbarkeit der Messwerte auf ein Normal erlaubt sowie einfach in der Fertigung ist.

Zur Lösung dieser Aufgabe schafft die vorliegende Erfindung ein Prüfnormal mit einem Grundkörper, welcher an einem Endbereich eine Halteeinrichtung zum Befestigen des Grundkörpers an einer Messaufnahme der Momentenwaage aufweist und bei welchem in Draufsicht auf den Grundkörper der Massenschwerpunkt des Grundkörpers mit dem geometrischen Schwerpunkt des Grundkörpers zusammenfällt.

Hierzu schlägt die Erfindung vor, anstatt der Meisterschaufeln Prüfnormale aus einem homogenen Material mit einer einfachen Geometrie bereitzustellen, um eine einfache und exakte Reproduzierbarkeit des Prüfnormals zu ermöglichen. Die Prüfnormale weisen im Gegensatz zu Schaufel keine komplexe Form auf und sind somit im Vergleich zu den Meisterschaufeln besonders einfach herzustellen, zumal keine teuren hochwarmfesten Werkstoffe erforderlich sind. Darüber hinaus ist vorteilhaft, dass das Prüfnormal als Maßverkörperung die Rückführbarkeit der Messergebnisse sicherstellt, wenn es beispielsweise durch ein akkreditiertes Prüflabor des Deutschen Kalibrierdienstes (DKD) zertifiziert wird. Dadurch, dass der Massenschwerpunkt mit dem geometrischen Schwerpunkt des Grundkörpers zusammenfällt, kann der Schwerpunkt auf einfache Weise geometrisch ermittelt werden. Dies ist bei Meisterschaufeln nicht der Fall, da diese - zumindest teilweise - hohl ausgebildet sind. Denkbar ist auch, dass der geometrische Schwerpunkt und der Massenschwerpunkt auseinanderfallen. Dann muss der Schwerpunkt aber geometrisch bestimmbar sein.

In bevorzugter Weise ist der Grundkörper in Bezug auf eine Mittelebene des Grundkörpers symmetrisch ausgebildet. Mit der symmetrischen Ausgestaltung des Grundkörpers geht einher, dass an einem dem mit der Halteeinrichtung vorgesehenen Endbereich gegenüberliegenden Endbereich des Grundkörpers eine zu der Halteeinrichtung identisch ausgebildete Ausgleichshalteeinrichtung vorgesehen ist. Durch die exakt gleiche Lage und Ausgestaltung der Halte- und Ausgleichshalteeinrichtung ist der Grundkörper symmetrisch ausgebildet und der Massenschwerpunkt liegt exakt im Zentrum des Grundkörpers.

Weiterhin kann der Grundkörper auch in Bezug auf eine weitere die eine Mittelebene des Grundkörpers senkrecht schneidende Mittelebene des Grundkörpers symmetrisch ausgebildet sein. Dadurch kann der Grundkörper des Prüfnormals besonders einfach und exakt gefertigt werden. Zudem kann der Winkelfehler der Vorrichtung ermittelt werden, indem ein Gewicht oder mehrere zusätzliche Gewichte an dem Grundkörper befestigt werden.

In Weiterbildung der vorliegenden Erfindung ist der Grundkörper plattenartig ausgebildet und weist eine längliche, insbesondere zumindest im Wesentlichen rechteckig ausgebildete Grundform auf. Durch die einfache Geometrie des Grundkörpers kann dieser besonders einfach und exakt gefertigt werden. Dabei können die Ecken des rechteckig ausgebildeten Grundkörpers mit einem definierten Radius abgerundet sein. Durch die plattenartige Grundform kann das Prüfnormal ohne Anpassung der Messaufnahme in die Momentenwaage eingehängt werden, da es die Funktionsgeometrien des Schaufelfußes nachbildet.

Bevorzugt weist die Halteeinrichtung eine Ausnehmung derart auf, dass der Grundkörper an einem Befestigungselement der Messaufnahme der Momentenwaage positionierbar ist. Vorteilhafterweise ist die Ausnehmung an einer Oberseite des Grundkörpers ausgebildet und erstreckt sich vorzugsweise über eine gesamte Breite des Grundkörpers. Dadurch ist der Grundkörper auf einfache Weise an der Messaufnahme der Momentenwaage befestigbar.

Zweckmäßigerweise ist die Ausnehmung als eine Nut, insbesondere eine V-Nut derart ausgebildet ist, dass der Grundkörper an einem stiftartig ausgebildeten Befestigungselement der Messaufnahme der Momentenwaage positionierbar ist. Üblicherweise weist die Messaufnahme der Momentenwaage einen quer zum Prüfnormal verlaufenden Haltestift auf, der je nach Momentenwaage einen unterschiedlichen Stiftdurchmesser aufweisen kann. Durch die V-Nut werden die unterschiedlichen Fußverzahnungen  der zu messenden Schaufeltypen durch eine einzige Nut generalisiert, wobei sich die V-Nut selbständig und reproduzierbar auf den Haltestiften der diversen Momentenwaagen trotz deren unterschiedlicher Stiftdurchmesser zentriert.

Gemäß einem Aspekt der vorliegenden Erfindung ist vorgesehen, dass der Grundkörper zumindest wenigstens ein Befestigungsmittel zum lösbaren Befestigen von zumindest wenigstens einem Messgewicht aufweist. Dadurch kann ein variables Prüfnormal bereitgestellt werden, bei dem der Massenschwerpunkt durch lösbares Befestigen des wenigstens einen Messgewichts veränderbar ist. Somit können mit einem Prüfnormal und zumindest einem weiteren Messgewicht das Gesamtgewicht und die Schwerpunktlage verschiedenster Schaufeln nachgeahmt werden. Bei dem wenigstens einen Messgewicht handelt es sich vorzugsweise um ein kalibriertes Messgewicht, um die Rückführbarkeit der Messungen auf ein Normal zu gewährleisten. Zweckmäßigerweise sind mehrere Messgewichte mit gleichen oder unterschiedlichen Massen vorgesehen, um mit dem einen Prüfnormal möglichst alle Schwerpunktlagen und Masseverteilungen der Schaufeln simulieren zu können. Zudem kann das wenigstens ein Messgewicht auch außerhalb der Mittelachse an unterschiedlichen Positionen befestigt werden, um über Differenzmessungen den Winkelfehler der Momentenwaage zu überprüfen.

Bei einer weiteren Ausgestaltung der vorliegenden Erfindung weist das wenigstens eine Befestigungsmittel zumindest wenigstens eine Bohrung, insbesondere eine Durchgangsbohrung auf, in welche das wenigstens ein Messgewicht insbesondere formschlüssig eingesetzt werden kann. Die Position der wenigstens einen Bohrung lässt sich in einem akkreditierenden Prüflabor rückführbar prüfen und zertifizieren. Durch die exakte Bestimmbarkeit der wenigstens einen Bohrung ist das Messgewicht stets exakt an der gleichen Position einsetzbar. Vorteilhafterweise sind eine Vielzahl von Bohrungen vorgesehen, um unterschiedlichste Schwerpunktlagen und Masseverteilungen simulieren zu können.

Des Weiteren betrifft die vorliegende Erfindung eine Messvorrichtung mit einer Momentenwaage, welche eine Messaufnahme aufweist, und wenigstens ein Prüfnormal der vorbeschriebenen Art, welches an der Messaufnahme lösbar gehalten werden kann. Vorteilhaft ist, dass die mit der Messvorrichtung gemessenen Ergebnisse auf ein Normal rückführbar sind.

In bevorzugter Weise ist zumindest wenigstens ein Messgewicht vorgesehen und weist das Prüfnormal zumindest wenigstens ein Befestigungsmittel zum lösbaren Befestigen des wenigstens einen Messgewichts auf. Somit können mit einem Prüfnormal Schaufeln unterschiedlichster Geometrie und unterschiedlichen Gewichts simuliert werden, so dass anstatt einer Vielzahl von Meisterschaufeln nur ein Prüfnormal mit wenigstens einem weiteren Messgewicht notwendig ist.

Hinsichtlich weiterer vorteilhafter Ausgestaltungen der Erfindung wird auf die Unteransprüche sowie auf die nachfolgende Beschreibung eines Ausführungsbeispiels unter Bezugnahme auf die beiliegende Zeichnung verwiesen. In der Zeichnung zeigt:

Figur 1     einen Ausschnitt einer Messvorrichtung gemäß einer Ausführungsform mit einem Prüfnormal und einem Messgewicht in Seitenansicht;

Figur 2     das Prüfnormal aus Figur 1 in Draufsicht;

Figur 3     das Prüfnormal und das Messgewicht aus Figur 1 in Seitenansicht;

Figur 4     einen Ausschnitt der Messvorrichtung aus Figur 1 in Seitenansicht beim Überprüfen des Abstandes zwischen einer Messaufnahme und dem Mittelpunkt der Messvorrichtung;

Figur 5 einen Ausschnitt der Messvorrichtung aus Figur 1 in Seitenansicht beim Überprüfen von Anzeigewerten der Messvorrichtung;

Figur 6 einen Ausschnitt einer in der Messvorrichtung aus Figur 1 gehaltenen Schaufel in Seitenansicht; und

Figur 7 das Prüfnormal aus Figur 1 in Draufsicht beim Überprüfen des Winkelfehlers der Messvorrichtung aus Figur 1.

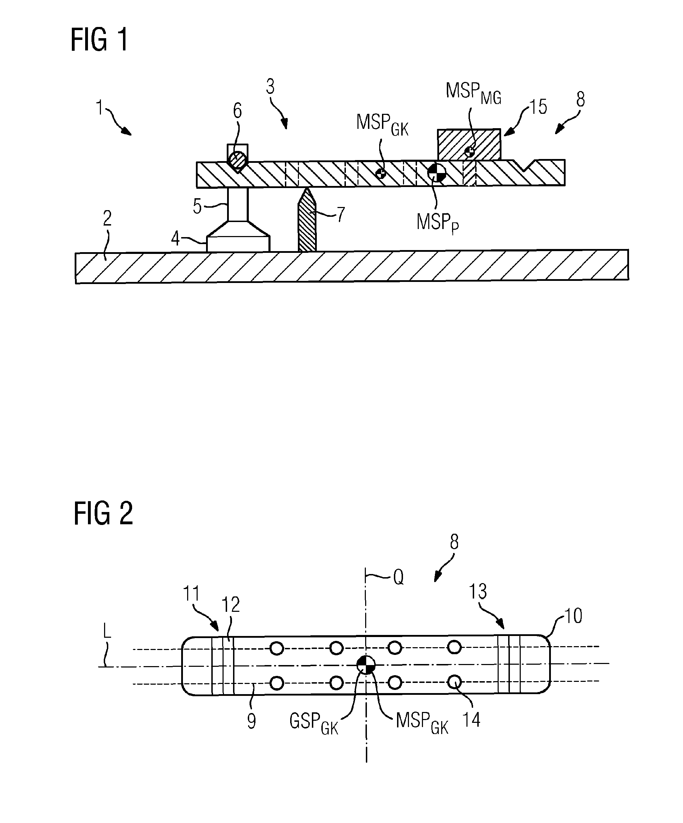

In Figur 1 ist ein Ausschnitt einer Messvorrichtung gemäß einer Ausführungsform gemäß der vorliegenden Erfindung dargestellt. Die Messvorrichtung dient in an sich bekannter Weise zur Messung eines Momentengewichts und eines Gewichts einer nicht dargestellten Schaufel.

Zu der Messvorrichtung gehört eine Momentenwaage 1, welche eine scheibenförmige, runde Grundplatte 2 aufweist. Die Grundplatte 2 stützt sich an ihrer Unterseite über mindestens drei nicht dargestellte Wägezellen auf einer nicht dargestellten Aufnahmeplatte ab. Die Wägezellen sind entlang eines Dreiecks angeordnet und geben entweder analoge oder digitale Messsignale ab, die einer nicht dargestellten Auswertevorrichtung zugeführt werden. Die Auswertevorrichtung besteht in der Regel aus einem Computer, auf welchem eine Auswertesoftware zur Auswertung der Messergebnisse der Messvorrichtung betrieben wird.

An der Oberseite der Grundplatte 2 ist eine Messaufnahme 3 angeordnet, in welche die zu wiegende Schaufel eingehangen werden kann. Konkret weist die Messaufnahme 3 zwei voneinander beabstandete Halteböcke 5 auf, zwischen denen ein zentraler Lagerbock 4 angeordnet ist. An ihrem oberen Endbereich sind die Halteböcke durch einen waagerecht verlaufenden Haltestift 6 miteinander verbunden. Weiter zur Mitte der Grundplatte 2 liegend weist die Messaufnahme 3 ein zentral vor den Halteböcken 5 angeordnetes Abstützelement 7 auf, welches vertikal von der Grundplatte 2 nach oben abragt. Die Höhe des Abstützelements 7 ist dabei so bemessen, dass die in die Messaufnahme 3 eingehängte Schaufel in waagerechter Lagerung unterseitig auf der Oberseite des Abstützelements 7 aufliegt. Das Abstützelement 7 ist hier stiftartig dargestellt, kann aber auch beispielsweise als eine kugelgelagerte Rolle ausgebildet sein.

Solch eine Momentenwaage 1 ist beispielsweise in der Druckschrift EP 2 363 698 A2 beschrieben. Um das Gewicht der eingehängten Schaufel zu messen, wird die Summe der auf die Wägezellen wirkenden Einzelkräfte gebildet. Darüber hinaus wird mit Hilfe der Einzelkräfte und der vorgegebenen Position der drei Wägezellen der Ort des Schwerpunkts der Schaufel in zwei Koordinatenrichtungen und das Momentengewicht berechnet.

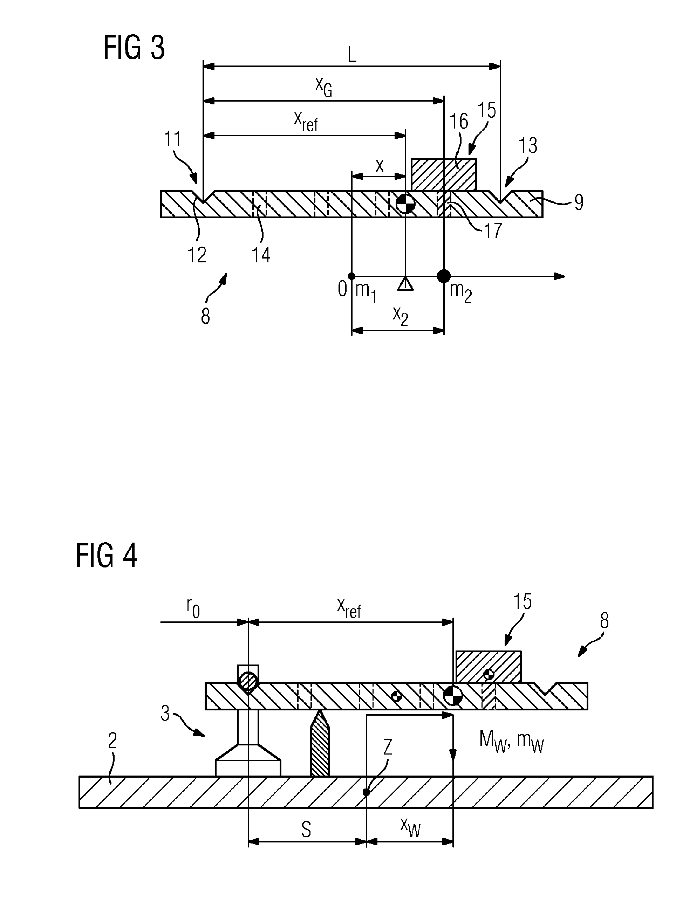

Um die Funktionalität der Momentenwaage 1 überprüfen zu können, umfasst die Messvorrichtung weiterhin ein Prüfnormal 8. In Figur 2 und 3 ist gut erkennbar, dass das Prüfnormal 8 einen im Wesentlichen rechteckig ausgebildeten Grundkörper 9 mit einer flachen Grundform aufweist. In einer Ausgestaltung kann der Grundkörper 9 so gestaltet sein, dass der geometrische Schwerpunkt $GSP_{GK}$ des Grundkörpers 9 mit dem Massenschwerpunkt $MSP_{GK}$ des Grundkörpers zusammenfällt. Auf jeden Fall muss die Lage des Massenschwerpunktes $MSP_{GK}$ exakt bekannt und geometrisch bestimmbar sein. Des Weiteren ist der Grundkörper 9 in Bezug auf eine Längsebene L des Grundkörpers 9 und auch in Bezug auf eine die Längsebene L senkrecht schneidende Querebene Q des Grundkörpers 9 symmetrisch ausgebildet. Die Ecken 10 des rechteckig ausgebildeten Grundkörpers 9 können mit einem definierten Radius abgerundet oder als definierte Fase ausgebildet sein.

An einem in Figur 2 links dargestellten Endbereich des Grundkörpers 9 ist eine Halteeinrichtung 11 zum Befestigen des Grundkörpers 9 an der Messaufnahme 3 der Momentenwaage 1 vorgesehen. Die Halteeinrichtung 11 ist an der Oberseite des Grundkörpers 9 ausgebildet und weist eine Ausnehmung 12 auf, welche sich über die gesamte Breite des Grundkörpers erstreckt. Die Ausnehmung 12 ist als eine V-Nut derart ausgebildet, dass der Grundkörper 9 an dem Haltestift 6 der Messaufnahme 3 der Momentenwaage 1 positionierbar ist. Durch die V-Nut 12 werden die unterschiedlichen tannenbaumartig ausgebildeten Fußverzahnungen der zu messenden Schaufeltypen durch eine Nut generalisiert, wobei sich die V-Nut 12 selbständig und reproduzierbar auf dem Haltestift 6 der Messaufnahme 3 zentriert.

Mit der symmetrischen Ausgestaltung des Grundkörpers 9 geht einher, dass an einem der Halteeinrichtung 11 gegenüberliegenden Endbereich des Grundkörpers 9, welcher in Figur 2 rechts dargestellt ist, eine zu der Halteeinrichtung 11 identisch ausgebildete Ausgleichshalteeinrichtung 13 ausgebildet ist. Durch die exakt gleiche Lage und Ausgestaltung der Halte- und Ausgleichshalteeinrichtung 11, 13 ist der Grundkörper 9 symmetrisch ausgebildet und der Massenschwerpunkt $MSP_{GK}$ liegt im Zentrum des Grundkörpers 9.

Weiterhin weist der Grundkörper 9 hier acht symmetrisch angeordnete Befestigungsmittel 14 auf, die vorteilhafterweise als Durchgangsbohrungen ausgebildet sein können und sich von der Oberseite des Grundkörpers 9 zu seiner Unterseite erstrecken. Ebenso wären aber auch Sacklöcher oder Senkungen denkbar.

Des Weiteren sind Messgewichte 15 vorgesehen, welche in die Durchgangsbohrungen 14 (beziehungsweise Sacklöcher oder Senkungen) eingesteckt werden können. Konkret weist jedes Messgewicht 15 einen Körper 16 auf, der beispielsweise zylindrisch, kugelförmig oder quaderförmig ausgebildet sein kann. An der Unterseite des Körpers 16 ist zentral ein Stift 17 angeordnet, dessen Außendurchmesser dem Innendurchmesser der Durchgangsbohrungen 14 entspricht, sodass der Stift 17 formschlüssig in die Durchgangsbohrung 14 eingesteckt werden kann. Zur Erhöhung der Positioniergenauigkeit bzw. Verbesserung der Handhabung können in einer alternativen Ausgestaltung die Durchgangsbohrungen 14 und Stifte 17 kegelförmig ausgebildet sein. Bei den Messgewichten 15 handelt es sich um kalibrierte Messgewichte aus einem homogenen Material mit einer definierten Masse und einem definierten Massenschwerpunkt $MSP_{MG}$. Die Messvorrichtung umfasst insgesamt mehrere solcher Messgewichte 15 mit gleichen und/oder unterschiedlichen definierten Massen.

Um das Gewicht und die Lage des Schwerpunkts einer zu vermessenden Schaufel bestimmen zu können, muss die Messvorrichtung zunächst für den jeweiligen Schaufeltyp eingerüstet werden. Abhängig davon, für welchen Schaufeltyp die Momentenwaage 1 eingerüstet werden soll, kann nun das Prüfnormal 8 ohne zusätzliche Messgewichte 15 oder mit einem oder mehreren Messgewichten 15 versehen werden, um das Gewicht und den Massenschwerpunkt bzw. das Momentengewicht des geforderten Schaufeltyps zu simulieren.

In Figur 4 ist gut erkennbar, dass hierzu die Messaufnahme 3 mit einem Abstand S zum Mittelpunkt Z der Grundplatte 2 befestigt wird. Der Abstand S wird dabei durch die Größe des zu wiegenden Schaufeltyps vorgegebenen, so dass der Schwerpunkt der Schaufel zumindest in etwa über dem Mittelpunkt Z der Grundplatte 2 liegt. Er ist Grundlage für die weitere Berechnung der Auswertesoftware, so dass die korrekte Einnahme der Position der Messaufnahme 3 auf der Grundplatte 2 vor Einsatz einer neuen Messaufnahme 3 überprüft werden muss.

Hierfür wird die Momentenwaage 1 zunächst mit der darauf befestigten Messaufnahme 3 tariert, so dass eine nicht dargestellt Anzeigeeinheit der Momentenwaage 1 ein Momentengewicht und ein Gewicht von Null anzeigt.

Um nun den geforderten Schaufeltyp simulieren zu können, wird hier in Figur 3 exemplarisch in die Durchgangsbohrung 14 des Prüfnormals 8, dessen Gewicht $m_1$ und Schwerpunktlage $MSP_{GK}$ exakt bestimmt sind, ein Messgewicht 15 eingesteckt, dessen Gewicht $m_2$ und Schwerpunkt $MSP_{MG}$ ebenfalls exakt bestimmt sind. Durch die Positionierung des Messgewichts 15 in die vorgegebene Durchgangsbohrung 14 ist die Position des Messgewichts auf dem Prüfnormal 8 exakt bestimmt. Somit ergibt sich folgender resultierender Massenschwerpunkt $MSP_P$:

Mit $m_1$ = exakt bestimmte Masse des Prüfnormals 8
$m_2$ = exakt bestimmte Masse des Messgewichts 15
x = Abstand zwischen Massenschwerpunkt $MSP_{GK}$ und resultierendem Massenschwerpunkt $MSP_P$

$x_2$ = Abstand zwischen Massenschwerpunkt $MSP_{MG}$ und $MSP_{GK}$

Wobei der Koordinatennullpunkt in den Massenschwerpunkt $MSP_{GK}$ gesetzt wird:

$$m_1 * x = m_2(x_2 - x)$$

Umgestellt nach x:

$$x = \frac{m_2}{m_1 + m_2} x_2$$

Mit L = Abstand zwischen den Mitten der beiden V-Nuten 12, 13

$$x_{ref} = \frac{L}{2} + x$$

Somit ist $x_{ref}$ der exakt bestimmbare Abstand zwischen der V-Nut 12 und dem Massenschwerpunkt $MSP_P$ und legt den Massenschwerpunkt $MSP_P$ eindeutig fest.
Um den Abstand S unter Bezugnahme des Prüfnormals 8 und des Messgewichts 15 bestimmen zu können, muss als nächstes das Prüfnormal 8 mit dem Messgewicht 15 in die Momentenwaage 1 eingehängt werden. Durch die V-Nut 12 positioniert sich das Prüfnormal gegenüber des Haltestifts 6 der Messaufnahme 3 reproduzierbar.

Anschließend wird der Wiegevorgang der Momentenwaage 1 gestartet und das Momentengewicht $M_W$ sowie das Gewicht $m_W$ des einhängten Prüfnormals 8 und des Messgewichts 15 gemessen.

Der Quotient $x_W$ aus dem gemessenen Momentengewicht $M_W$ und Gewicht $m_W$ des eingehängten Prüfnormals 8 und des Messgewichts 15 wird von der vorgegebenen Schwerpunktlage $x_{ref}$ abgezogen und bildet den korrigierten Abstand $S^*$:

$$S^* = x_{ref} - \frac{M_W}{m_W}$$

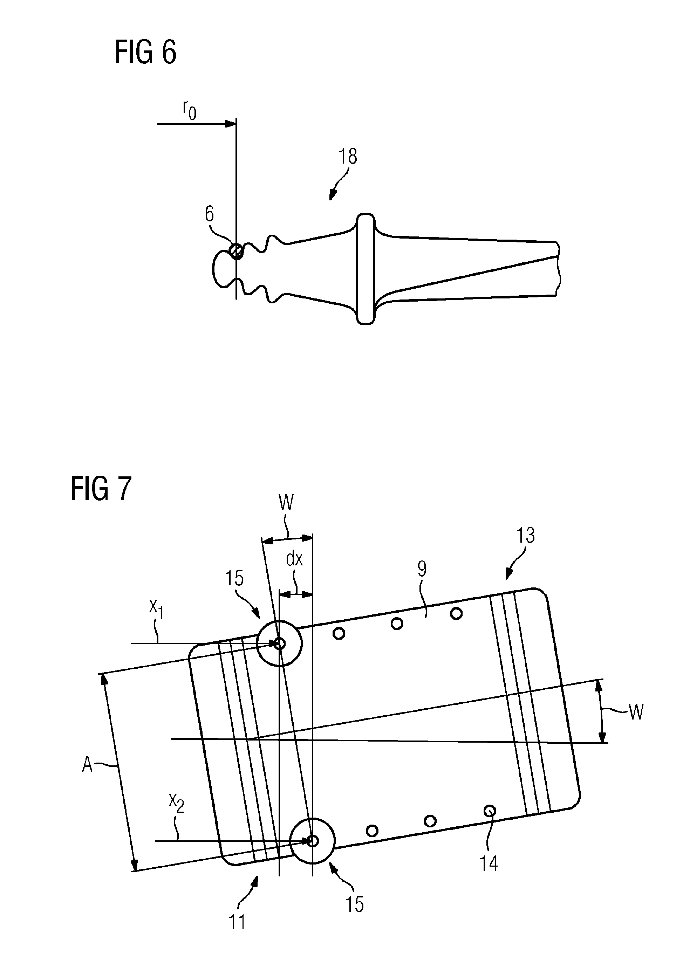

Der korrigierte Abstand $S^*$ wird in die Auswertesoftware zusammen mit einem sich aus dem für den jeweiligen Schaufeltyp ergebenen Konstruktionsmaß $r_0$, welches durch den Abstand zwischen dem Mittelpunkt eines Rotors und dem Eingriffspunkt des Haltestiftes 6 in ein Schaufelfußprofil 18 einer zu montierenden Schaufel definiert ist (Figur 6), eingegeben. Damit ist die Messvorrichtung für die Messung mit den Schaufeln eingerüstet und überprüft.

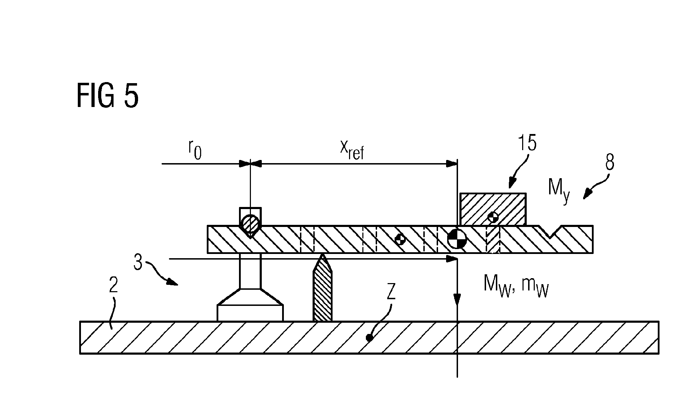

Bei den wiederkehrenden, insbesondere vor den Messungen stattfindenden täglichen Überprüfungen der Messvorrichtung wird gemäß Figur 5 das Prüfnormal 8 mit dem exakt bekannten Schwerpunkt $MSP_{GK}$ und Gewicht $m_1$ und, je nach dem welcher Schaufeltyp simuliert werden soll, mit dem gesteckten Messgewicht 15, dessen Schwerpunkt $MSP_{MG}$ und Gewicht $m_2$ exakt bestimmt ist, in die austarierte Momentenwaage 1 eingehängt. Das Momentengewicht $M_y$, bezogen auf den Mittelpunkt eines Rotors errechnet sich zu:

$$M_y = (m_1 + m_2) * (r_0 + x_{ref})$$

Danach werden das auf der Anzeigeeinheit angezeigte Momentengewicht $M_W$ sowie Gewicht $m_W$ mit den durch das Prüfnormal 8 und Messgewicht 15 exakt vorgegebenen Werten My und $m_1 + m_2$ verglichen. Wenn die angezeigten Werte mit den vorgegebenen Werten übereinstimmen oder die Abweichungen in einem definierten Toleranzfeld (zum Beispiel Herstellerangabe) liegen, kann die Momentenwaage 1 für den Schaufeltyp, für welchen sie eingerüstet worden ist, freigegeben werden. Sollten die Messwerte außerhalb des Toleranzfeldes liegen, muss die Messvorrichtung überprüft und gegebenenfalls korrigiert oder ersetzt werden.

[0037] [0042] In Figur 7 ist gut erkennbar, dass darüber hinaus auch ein Winkelfehler W des gesamten Messaufbaus bestimmt werden kann. Hierzu wird zumindest eines der Messgewichte 15 in eine der Durchgangsbohrungen 14 gesteckt und das auf der Anzeigeeinheit angezeigte Momentengewicht $M_{W1}$ abgelesen. Anschließend wird das Messgewicht 15 wieder entnommen und in die gegenüberliegende Durchgangsbohrung 14 gesteckt. Dann wird der Messvorgang erneut gestartet und das Momentengewicht $M_{W2}$ auf der Anzeigeeinheit abgelesen. Basierend auf den beiden abgelesenen Momentengewichten $M_{W1}$ und $M_{W2}$ und der bekannten Masse $m_{MG}$ des Messgewichts 15 sowie des exakt bestimmbaren Abstandes A der beiden gegenüberliegenden Durchgangsbohrungen 14 kann der Winkelfehler W exakt bestimmt werden:

$$dM = M_{W2} - M_{W1} = m * (x_2 - x_1)$$

$$dx = x_2 - x_1 = dM/m$$

$$Sin(W) = dx/A$$

$$W = arcsin(dx/A)$$

Mit $x_1$ bzw. $x_2$ = Abstand zwischen dem Mittelpunkt eines Rotors und dem Mittelpunkt der entsprechenden Durchgangsbohrung 14.

Durch Eingabe des berechneten Wertes W in die Auswertesoftware lässt sich der Winkelfehler W vollständig kompensieren.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Prüfnormal (8) zum Überprüfen einer Momentenwaage (1), mit einem Grundkörper (9), welcher an einem Endbereich eine Halteeinrichtung (11) zum Befestigen des Grundkörpers (9) an einer Messaufnahme (3) der Momentenwaage (1) aufweist und bei welchem in Draufsicht auf den Grundkörper (9) der Massenschwerpunkt ($MSP_{GK}$) des Grundkörpers (9) mit dem geometrischen Schwerpunkt ($GSP_{GK}$) des Grundkörpers (9) zusammenfällt.

2. Prüfnormal (8) nach Anspruch 1,
**dadurch gekennzeichnet, dass**
der Grundkörper (9) in Bezug auf eine Mittelebene (L) des Grundkörpers (9) symmetrisch ausgebildet ist.

3. Prüfnormal (8) nach Anspruch 2,
**dadurch gekennzeichnet, dass**
der Grundkörper (9) auch in Bezug auf eine weitere die eine Mittelebene(L) des Grundkörpers (9) senkrecht schneidende Mittelebene (Q) des Grundkörpers (9) symmetrisch ausgebildet ist.

4. Prüfnormal (8) nach einem der vorherigen Ansprüche,
**dadurch gekennzeichnet, dass**
der Grundkörper (9) plattenartig ausgebildet ist und eine längliche, insbesondere zumindest im Wesentlichen rechteckig ausgebildete Grundform aufweist.

5. Prüfnormal (8) nach einem der vorherigen Ansprüche,

**dadurch gekennzeichnet, dass**
die Halteeinrichtung (11) eine Ausnehmung (12) derart aufweist, dass der Grundkörper (9) an einem Befestigungselement (6) der Messaufnahme (3) der Momentenwaage (1) positionierbar ist.

6. Prüfnormal (8) nach Anspruch 5,
   **dadurch gekennzeichnet, dass**
   die Ausnehmung (12) an einer Oberseite des Grundkörpers (9) ausgebildet ist und sich vorzugsweise über eine gesamte Breite des Grundkörpers (9) erstreckt.

7. Prüfnormal (8) nach Anspruch 5 oder 6,
   **dadurch gekennzeichnet, dass**
   die Ausnehmung (12) als eine Nut,
   insbesondere eine V-Nut derart ausgebildet ist,
   dass der Grundkörper (9) an einem stiftartig ausgebildeten Befestigungselement (6) der Messaufnahme (3) der Momentenwaage (1) positionierbar ist.

8. Prüfnormal (8) nach einem der vorherigen Ansprüche,
   **dadurch gekennzeichnet, dass**
   der Grundkörper (9) zumindest wenigstens ein Befestigungsmittel (14) zum lösbaren Befestigen von zumindest wenigstens einem Messgewicht (15) aufweist.

9. Prüfnormal (8) nach Anspruch 8,
   **dadurch gekennzeichnet, dass**
   das wenigstens eine Befestigungsmittel (14) zumindest wenigstens eine Bohrung,
   insbesondere eine Durchgangsbohrung aufweist,
   in welche das wenigstens eine Messgewicht (15) insbesondere formschlüssig eingesetzt werden kann.

10. Messvorrichtung mit einer Momentenwaage (1), welche eine Messaufnahme (3) aufweist,
    und wenigstens einem Prüfkörper (8), welcher an der Messaufnahme (3) lösbar gehalten werden kann,
    **dadurch gekennzeichnet, dass**
    der Prüfkörper (8) als ein Prüfnormal nach einem der vorherigen Ansprüche ausgebildet ist.

11. Messvorrichtung nach Anspruch 10,
    **dadurch gekennzeichnet, dass**
    zumindest wenigstens ein Messgewicht (15) vorgesehen ist und dass das Prüfnormal (8) zumindest wenigstens ein Befestigungsmittel (14) zum lösbaren Befestigen des wenigstens einen Messgewichts (15) aufweist.

FIG 1

FIG 2

FIG 3

FIG 4

FIG 5

FIG 6

FIG 7

**EUROPÄISCHER RECHERCHENBERICHT**

Nummer der Anmeldung

EP 12 16 5244

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 557 434 A (AVERY LTD W & T; EDWARD BOWEN) 19. November 1943 (1943-11-19) | 1-3,5-11 | INV. G01M1/10 F01D21/00 G01M1/12 |
| A | * Seite 4, Zeilen 100-110; Abbildungen 5,6 * | 4 | |
| | * Seite 5, Zeilen 70-75 * ----- | | |
| X | US 2011/030459 A1 (TRAGESSER DANIEL [US] ET AL) 10. Februar 2011 (2011-02-10) * Absätze [0014], [0015], [0019]; Abbildungen 1-4 * ----- | 1,4 | |
| A | Richard Boynton: "Hidden Errors in turbine blade moment measurement and how to avoid them", 56th Annual Conference of Society of Allied Weight Engineers, 21. Mai 1997 (1997-05-21), XP55040738, Washington Gefunden im Internet: URL:http://www.space-electronics.com/Literature/Hidden_Errors_Turbine_Blade.pdf [gefunden am 2012-10-11] * das ganze Dokument * ----- | 1-11 | |

**RECHERCHIERTE SACHGEBIETE (IPC)**

G01M
F01D
G01G

Der vorliegende Recherchenbericht wurde für alle Patentansprüche erstellt

| Recherchenort | Abschlußdatum der Recherche | Prüfer |
|---|---|---|
| Den Haag | 2. November 2012 | Debesset, Sébastien |

**ANHANG ZUM EUROPÄISCHEN RECHERCHENBERICHT
ÜBER DIE EUROPÄISCHE PATENTANMELDUNG NR.**

EP 12 16 5244

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

02-11-2012

| Im Recherchenbericht angeführtes Patentdokument | Datum der Veröffentlichung | Mitglied(er) der Patentfamilie | Datum der Veröffentlichung |
|---|---|---|---|
| GB 557434 A | 19-11-1943 | KEINE | |
| US 2011030459 A1 | 10-02-2011 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2363698 A2